Europäisches Patentamt

European Patent Office

Office européen des brevets

(11) Publication number: **0 584 556 A2**

## EUROPEAN PATENT APPLICATION

(21) Application number: **93111970.5**

(22) Date of filing: **28.07.93**

(51) Int. Cl.5: **C08F 8/08**, C08G 81/02

(30) Priority: **17.08.92 US 931147**

(43) Date of publication of application:
**02.03.94 Bulletin 94/09**

(84) Designated Contracting States:
**DE FR GB**

(71) Applicant: **REICHHOLD CHEMICALS, INC.**
**2400 Ellis Road**
**Durham, NC 27703(US)**

(72) Inventor: **Williams, Roy C.**
**10100 Grafton**
**Raleigh, North Carolina 27615(US)**

(74) Representative: **Weber, Dieter, Dr. et al**
**Weber, Dieter, Dr.,**
**Seiffert, Klaus, Dipl.-Phys.,**
**Lieke, Winfried, Dr.**
**Postfach 61 45**
**D-65051 Wiesbaden (DE)**

(54) Chlorendic anhydride half ester.

(57) An ultraviolet light resistant acrylic polymer is provided which comprises the reaction product of a multifunctional aliphatic epoxide containing oligomer and a chlorendic half-ester functional acrylic polymer comprising the reaction product of a) from 13 to 58 percent by weight of half-ester of a hydroxy lower alkyl acrylate; b) from 5 to 56 percent by weight of half-ester of additional unsaturated monomer copolymerizable with a); and c) from 30 to 60 percent by weight of half-ester of chlorendic anhydride, wherein a) and b) are copolymerized to form a prepolymer and c) is reacted with pendant hydroxy groups on the prepolymer to form the light resistant acrylic polymer.

The invention also includes chlorendic half-ester, coatings including the half-ester and further includes methods of preparation.

Background of the Invention

This invention relates to protective coatings formed by the reaction of two liquid components subsequent to their mixing and application to objects to be coated. Particularly, it relates to those films formed from a multi-carboxylic acid functional component polymer and a multi-epoxy functional second component polymer. More particularly, it relates to the films formed by reaction of an epoxy functional (oxirane ring containing) reactant where the reactant epoxy oligomer is not formed from the diglycidyl ether of Bisphenol A or similar components which are not UV light stable, but from epoxy functional polymers or oligomers of aliphatic or cyclo-aliphatic composition such as epoxidized soya bean oil or 3',4'-epoxycyclohexymethyl 3,4-epoxycyclohexane carboxylate. Such aliphatic epoxides are slower to react with and give less light stable films when reacted with the amine functional components used to cure aromatic epoxies. Thus, acid functional oligomers or polymers are frequently preferred as the other component to give light (UV) stable coatings with these epoxies. One of the drawbacks of the acid functional oligomer-aliphatic epoxy functional oligomer crosslinking two component system is that it is very slow to react at ambient temperatures and this makes it difficult to use them as coatings for objects which cannot be heated easily, e.g. objects which are large or heat sensitive. The coatings of such objects frequently are exposed to strong sunlight; thus, ultraviolet light resistance must be good for adequate coatings performance.

Fast reacting two component compositions with the strong organic acid (chlorendic acid) are known, see e.g., U.S. Patent 3,218,274 to Boller. Such compounds as described in Boller do not have the desirable properties associated with acrylic type polymers. U.S. Patent 4,065,368 describes a chlorendic anhydride half ester formed by the reaction of chlorendic anhydride with castor oil and then reacting with an acrylic monomer. Such compounds are not UV resistant as required by the present invention and in fact intentionally incorporate UV sensitive materials to effect UV curing properties. Further, the order of reaction steps yields entirely different compounds than desired in accordance with the present invention.

Brief Description of the Invention

Our invention concerns the unexpected discovery that when the strong organic acid, chlorendic acid, is reacted onto side chains on certain acrylic oligomers, the acrylic oligomer shields the chlorendic acid half-ester epoxy linkages, subsequently formed during the crosslinking reaction, from the degradations normally expected with these linkages when the coating is exposed to UV light.

The acrylic oligomers or polymers of the invention are those prepared from the reaction of acrylic copolymers having pendant hydroxyl functionality such as that from the copolymerization of hydroxy-propyl methacrylate with other acrylic monomers and subsequent reaction with chlorendic acid anhydride to form the acid functional half ester polymers.

An ultraviolet light resistant acrylic polymer is provided which comprises the reaction product of a multifunctional aliphatic epoxide containing oligomer and a chlorendic half-ester functional acrylic polymer comprising the reaction product of a) from 13 to 58 percent by weight of half-ester of a hydroxy lower alkyl acrylate; b) from 5 to 56 percent by weight of half-ester of additional unsaturated monomer copolymerizable with a); and c) from 30 to 60 percent by weight of half-ester of chlorendic anhydride, wherein a) and b) are copolymerized to form a prepolymer and c) is reacted with pendant hydroxy groups on the prepolymer to form the light resistant acrylic polymer.

The invention also includes chlorendic half-ester, coatings including the half-ester and further includes methods of preparation.

Detailed Description of the Invention

The polymers of the present invention are prepared by polymerization of at least three monomers. The first is from about 13% to 58%, by weight of the polymer, of hydroxy alkyl acrylate or methacrylate. These acrylates or methacrylates include, for example, hydroxyethyl acrylate, hydroxyethyl methacrylate, hydroxypropyl acrylate, hydroxypropyl methacrylate, 2-hydroxy butyl acrylate and the like. Of these, hydroxyethyl methacrylate has been preferred because of more complete reaction with the chlorendic anhydride. "Hydroxyalkyl acrylate" as used herein includes hydroxyalkyl methacrylates. "Alkyl", in this context, is intended to mean lower alkyl of 5 or fewer carbon atoms.

The second monomer used in the preparation of the present polymer is one or more ethylenically unsaturated monomers copolymerizable with the other components. The second monomer, i.e., additional monomer, is usually a vinyl unsaturated compound. "Vinyl unsaturated" is intended to include acrylates and methacrylates, but is not limited to those compounds. Usually no more than a few percent, e.g., less than 5 percent, of the vinyl unsaturated monomer is halogenated monomer. The monomeric components are present in quantities of about 5% to 56% by weight of the monomeric mixture. Such monomers include, for example, methyl methacrylate, butyl acrylate, butyl methacrylate, lauryl acrylate, lauryl methacrylate, 2-ethylhexyl acrylate, isobutyl acrylate, styrene, vinyl toluene, acrylonitrile and the like. Mixtures of methyl methacrylate and acrylonitrile and the like. Mixtures of methyl methacrylate and butyl acrylate have been found to give the more economical results.

The third component is from 30% to 60% of chlorendic anhydride. An alternate other cyclic anhydride may be included, such that the total content of the chlorendic anhydride is at least 30% of the polymer.

The copolymerization of the first two monomeric constituents can be done in aphotic (inert) solvent in the presence of a free-radical initiator of peroxide or Azo type. Typical solvents which can be used include ethers, glycol ether acetates such as propylene glycol methyl ether acetate, and ketones such as methyl amyl ketone. Initiators which can be used include, for example, azobix (2-methylpropanenitrile), azobis (cyclohexanecarbonitrile), dicunyl peroxide, di t-butyl peroxide, and ethyl-3,3-di(t-amylperoxy) butyrate. Polymerization temperatures, at reflux, are preferably in the range of 135° to 150°C.

The cyclic carboxylic strong acid anhydride of choice for this reaction is chlorendic anhydride but minor amounts of other anhydrides could be used for other effects in these half-ester functional acrylic oligomers. The anhydride is present from about 30 to 60% by weight. Typically, the reaction is conducted by mixing the anhydride and the hydroxyl functional acrylic polymers at molar ratios of about 1:1 up to 1:2 and normally about 1:1.3 anhydride group to hydroxyl groups. The half-esterification temperature of from 80°C to above 150°C may be used. At the relatively lower temperatures the carboxylic acid group formed as part of the half-ester is not appreciably reactive with the hydroxyl groups; therefore, this carboxyl does not compete for hydroxyls with the ring opening half-ester reaction of the unreacted anhydride or react with the hydroxyls on other acrylic chains to crosslink the polymer chains.

When the reaction is conducted at the relatively lower temperatures, the reaction is much slower and it is sometimes useful, but not necessary, to utilize an esterification catalyst. Useful catalysts can be selected from the group consisting of tertiary amines such as triethylamine or benzyldimethylamine when present in amounts of about 0.5% to about 1.0% based upon the weight of the anhydride.

Generally, the reaction proceeds to at least 85%, and preferably at least 95%, conversion of the charged anhydride to half-ester. After completion of the half-ester formation, alternate additional solvents can be added such as alcohols or glycol ethers which could otherwise react with the anhydrides but would be desirable for paint performance and stability.

The invention relates to the use of the acrylic-chlorendic half-ester as a curing agent for multifunctional aliphatic epoxide containing polymers. The preferred epoxides used may include epoxidized oils such as soybean and linseed oils, and glycidyl methacrylate acrylic copolymers and cyclic aliphatic epoxides such as 3',4'-epoxycyclohexyloxirane, 6,3(3,4-epoxycyclohexyl-methyl) carboxylate, e.g., adipate, or epoxy functional acrylic polyols derived from copolymers of glycidyl methacrylate or the like. The epoxy to acid equivalent ratios of the two component crosslinking reaction used, may be varied between 0.8:1 up to 2:1, and preferably from 1:1 up to 1.5:1. Many types of pigments can be introduced in the coating compositions at various pigment binder ratios.

High solids compositions are very desirable with this invention and thus some portion of the solvent is used to assist in viscosity control. In such instances, the rapidly evaporating ketones are preferred. The coating solution can be applied to a substrate by many of the conventional coating techniques such as brushing or spraying. Many of the known spray techniques may be employed such as electrostatic spraying, or compressed air spraying, using either manual or automatic methods.

The coating compositions of the invention can be cured at ambient temperature readily; although, they can also be cured at elevated temperature. It is a distinct feature of this invention that the high solids components display fast air dry times and hardness development; also that the cured films display excellent gloss and remarkable exterior durability (QUV) properties.

The invention may be further defined, but not limited, by reference to the following examples. Unless otherwise stated, all parts are by weight.

Example 1

A polyester with strong organic acid functionality was prepared by reacting 42 parts by weight of pentaerythritol, 74 parts of phthalic anhydride and 185 parts of chlorendic anhydride in the presence of 130 parts of xylene to aid fluidity at 140°Cunder reflux. After the reaction had proceeded for approximately three hours with the evolution of one part of water and the acid value being reduced to 165 (ASTM P-16-39), the polyester solution in xylene was diluted with 41 parts of ethoxyethanol acetate, 7 parts of n-butanol, and 23 parts of additional xylene. When cooled to ambient temperature the polyester solution had a non-volatile (solids) content of 60% (ASTM 1694) and a viscosity of five stokes (ASTM 1545).

A coating composition, or paint, was prepared by dispersing 23.5 grams of titanium dioxide pigment in 56.3 grams of the above polyester; 1.9 grams of anti-settling dispersing agent (NL Chemicals MPA-200X); 0.4 grams of acrylic resin flow modifier (Modaflow Monsanto Company), 50% solution in xylene; and 25 grams of methyl isobutyl ketone in a glass bead shaker mill to a particulate fineness of 7 on a Stegman grind gauge. The particular dispersing agents and flow modifiers used do not form a part of the present invention and essentially any of such materials may be used as is well known to those skilled in the art. A particularly suitable flow modifier is a 2 ethyl hexyl acrylate copolymer. Other suitable flow modifiers, for example, include polysiloxanes. A second component composed of 25.0 grams of a mixture of one part by weight of epoxidized soya oil and one part epoxidized linseed oil having a combined epoxide content of 7.4% and 2.8 grams of xylene was added and mixed. The resulting paint, comprised of the two components, had a ratio of epoxide equivalent groups to acid equivalent groups of 1.2 to 1.

The two component mixture was coated on steel panels to an average thickness of one mil (1/1000 inch) and allowed to cure at ambient temperature (i.e., approximately 25°C). The film was dry through and tack free (ASTM D1690) after three hours and developed a pencil hardness of H (ASTM D3363) and a gloss at 60° of 95 (ASTM D-523) after seven days of curing with an impact resistance of 20 inch pounds (ASTM D-2794). It resisted 38 rubs of a cloth soaked in methyl ethyl ketone (MEK) before failure by removal. After exposure to ultraviolet radiation and water in a QUV machine (lamp B-313 UV with 50° condensation cycle of 4 hours and 60° light cycles of 8 hours for only 500 hours its gloss was reduced to 13% of its original value. After 45° south exposure to weathering in Florida for nine months only 15% of its gloss was retained. This is an unacceptable rate of loss of gloss in terms of paint appearance and would be expected from a polyester coating with a high content of strong organic acid esters.

Example 2

An acrylic copolymer maleic anhydride half-ester was prepared from hydroxyethyl methacrylate, butyl acrylate, methyl methacrylate and maleic anhydride from the following solvent and reactant solutions according to the following procedure.

### Acrylic-Maleic Ester Preparation

|  | Parts by Weight |
|---|---|
| **Portion 1** | |
| Methyl amyl ketone | 694 |
| | |
| **Portion 2** | |
| Hydroxyethyl Methacrylate | 306 |
| Butyl Acrylate | 255 |
| Methyl Methacrylate | 306 |
| Ethyl-3,3-di(t-amylperoxy)butyrate | 13 |
| | |
| **Portion 3** | |
| Di t-butyl peroxide | 7 |
| | |
| **Portion 4** | |
| Maleic anhydride | 154 |

Portion 1 was charged into a reaction flask and heated to reflux, approximately 143°C. Reflux was maintained while adding Portion 2 mixture dropwise over a three-hour period. The reaction mixture was maintained at 143°C for two hours after which time Portion 3 was charged and was maintained at the reaction temperature for three hours. The ingredient of Portion 4 was charged at 121°C for four hours. The final resin had a viscosity of 15.4 stokes, acid number of 98.7 and a solids content of 55.7% by weight.

4

A coating composition for films was produced by blending 30.8 grams of the above acrylic copolymer maleic half-ester with 10.0 grams of a second component of persulfuric acid epoxidized tall fatty acid ester with approximately 5.8% epoxide content or oxirane oxygen content. The resulting composition was coated on glass panels and cured at ambient temperature for seven days. The film was tacky and readily deformed by wiping with a cloth for more than seven days which is an unacceptable rate of cure or hardness development for a two-component coating and represents what would be expected from an acrylic polymer with only weak organic acid functionality.

Example 3

An acrylic-chlorendic ester was prepared from hydroxyethyl acrylate, butyl acrylate, methyl methacrylate and chlorendic anhydride from the following solvent and reactant solutions.

## Acrylic-Chlorendic Ester Preparation

| | Parts by Weight |
|---|---|
| **Portion 1** | |
| Propylene glycol methyl ether acetate | 180.00 |
| **Portion 2** | |
| Hydroxyethyl acrylate | 100.00 |
| Butyl acrylate | 82.00 |
| Methyl methacrylate | 206.00 |
| Azobis (2-methylpropanenitrile) | 6.00 |
| Isooctyl Thioglycolate | 1.80 |
| **Portion 3** | |
| Di t-Butyl peroxide | 2.00 |
| **Portion 4** | |
| Chlorendic anhydride | 303.00 |
| **Portion 5** | |
| Propylene glycol methyl ether acetate | 129.00 |

Solvent Portion 1 was charged into a reaction vessel and heated to reflux, approximately 140°C. Reflux was maintained after which time premixed monomers of Portion 2 were added dropwise over a three-hour period. The reaction was maintained at this reaction temperature for one hour after which Portion 3 was introduced into the reaction. The mixture was maintained at reflux for one hour after which Portion 4 was charged and the reaction mixture was maintained at 140°C for one hour. Then Portion 5 was added and the reaction solution was cooled. The final resin had acid number of 47.3 and a solids content of 70.4% by weight. The polymer was composed of approximately 14% hydroxyfunctional acrylate, 42% other acrylic monomer and 44% Chlorendic anhydride as its half-ester.

Example 4

A coating composition was prepared using the method of Example 1 by dispersing 53.7 grams of titanium dioxide in 90.3 grams of the acrylic copolymer Chlorendic half-ester polymer of Example 3, 1.9 grams of dispersing agent, 0.43 grams of 50% flow modifier and 49.0 grams of methyl isobutyl ketone. The second paint component was 25.0 grams of epoxidized tall fatty acid ester with 5.8% epoxide content. After mixing of the components a 1.2:1 epoxy:acid equivalent ratio was obtained and the resulting paint was coated on steel panels and the films of one mil thickness were allowed to cure at ambient temperature. The paint film was dry through and tack-free after four hours and 15 minutes. After seven days, the cured films displayed gloss at 60° of 90, H pencil hardness, 20 inch pound impact resistance and good solvent resistance of 50 MEK rubs. The percent gloss retention was 46% after 1100 hours of testing exposure in the QUV machine. Exposure to 45° south Florida testing showed a 67% retention of gloss after 12 months of exposure of the paint film. This illustrates the improved resistance to U.V. Light and weathering of the acrylic copolymer Chlorendic half-ester combined with the fast cure and hardness development.

Example 5

An acrylic-chlorendic half-ester was synthesized from hydroxypropyl methacrylate, butyl methacrylate and chlorendic anhydride from the following solvent and reactant solutions.

## Acrylic-Chlorendic Ester Preparation

|  | Parts by Weight |
|---|---|
| **Portion 1** | |
| Propylene glycol methyl ether acetate | 1204.00 |
| **Portion 2** | |
| Hydroxypropyl methacrylate | 495.00 |
| Butyl methacrylate | 919.00 |
| Isooctyl thioglycolate | 6.00 |
| Azobis (cyclohexane carbonitrile) | 12.00 |
| **Portion 3** | |
| Di t-butyl peroxide | 12.00 |
| **Portion 4** | |
| Chlorendic anhydride | 606.00 |

Solvent Portion 1 was charged into a reactor and heated to 122°C. The ingredients of Portion 2 were added dropwise over a three-hour period at 122°C. The reaction temperature was maintained at 122°C for one hour after which Portion 3 was charged and maintained at 122°C for an additional four hours. The ingredient of Portion 4 was added and the reaction mixture was maintained at 122°C for one hour. The final product had a number average molecular weight of 3900 (gel permeation chromatography), a viscosity of 348 stokes, acid value of 46 and a solids content of 65.3% by weight. This example illustrates the use of an alternate hydroxy functional acrylic monomer and alternate methacrylate monomer (vinyl monomer comonomer).

A coating composition component was prepared using the method of Example 1 by dispersing 125 grams of titanium dioxide in 241 grams of this above acrylic copolymer Chlorendic half-ester polymer, 1.0 gram of 50% flow modifier, dissolved in xylene, 4 grams of dispersing agent and 50 grams of methyl isobutyl ketone. A second component was prepared from 50 grams of epoxidized tall fatty acid ester with 5.8% epoxide content, and sixty grams of methyl isobutyl ketone. Upon mixing of the two components, the resulting paint had an epoxide to acid equivalent ratio of 1.4:1. The paint was applied to steel panels to a coating thickness of approximately 1 mil and allowed to cure at ambient temperature.

The coating was dry through and tack-free in four hours and after seven days of curing it has a pencil hardness of "HB," a gloss of 83 at 60°, an impact resistance of 100 inch pounds, and passed 12 rubs with a rag soaked in methyl ethyl ketone. After 800 hours of exposure to QUV machine testing it retained 98% of its gloss. After exposure to outside weathering at 45° south Florida for 21 months, it showed good resistance to the UV light degradation retaining 75% of its original gloss.

Example 6

An acrylic chlorendic ester was prepared from hydroxyethyl methacrylate, butyl acrylate, methyl methacrylate and chlorendic anhydride from the following solvent and reactant solutions.

6

## Acrylic-Chlorendic Ester Preparation

| | Parts by Weight |
|---|---|
| **Portion 1** | |
| Propylene glycol methyl ether acetate | 890.00 |
| | |
| **Portion 2** | |
| Hydroxyethyl methacrylate | 276.00 |
| Butyl acrylate | 538.00 |
| Methyl methacrylate | 95.00 |
| Azobis (cyclohexane carbonitrile) | 24.00 |
| Isooctyl thioglycolate | 7.00 |
| | |
| **Portion 3** | |
| Di t-butyl peroxide | 8.00 |
| | |
| **Portion 4** | |
| Chlorendic anhydride | 606.00 |
| Propylene glycol methyl ether acetate | 146.00 |

Following procedure described in Example 1, Portion 1 was charged into a reactor and heated to reflux, approximately 140°C. Reflux was maintained while adding Portion 2 mixture dropwise over a three-hour period. The mixture was maintained at 140°C for two hours after which time Portion 3 was added. The reaction mixture was maintained at reflux for an additional three hours. The copolymer solution has viscosity ASTM 1545 of 1.4 stokes and a solids content of 52% by weight. The resulting copolymer had a number average molecular weight of 2700 (gel permeation chromatography). The method for measurement of this test was against a polystyrene standard using a Perkin Elmer instrument L-C 90 detector L-C 100 oven, 100 sampler, 222C pump and columns for $10^6$ A, $10^5$ a, $10^4$ A, and $10^3$ A in a mixed bed.

The reaction temperature was cooled to 122°C and Portion 4 was charged. The reaction mixture was maintained at 122°C for four hours. The resulting ester had a number average molecular weight of 3200 (gel permeation chromatography as above), viscosity of 5.7 stokes, acid number of 64.7 and a solids content of 60% by weight. This example illustrates the preparation of a softer, more flexible acrylic copolymer than that of Example 3.

Example 7

A coating composition component was prepared by the method of Example 1 in which grams of $TiO_2$ was dispersed with 108.7 grams of the polymer of Example 6. The second component consisted of 25 grams of epoxidized tall fatty acid ester with 5.8% epoxy content, 1.9 grams of MPA dispersing agent, 0.43 grams of 50% flow modifier and 25.0 grams of methyl isobutyl ketone. The two components were mixed giving a 1.2:1 epoxide to acid equivalence ratio and coated on steel panels and cured at ambient temperature. The film initial through dry time was nine hours. After seven days of curing the film displayed 60° gloss of 91 and F pencil hardness. A gloss retention of 69% after 1000 hours QUV exposure was obtained. After 21 months' exposure in Florida this composition retained 45% of its original 60° gloss. This example illustrates the reaction of the acrylic copolymer chlorendic half-ester with an epoxidized fatty acid ester.

Example 8

A coating formulation component was prepared using the method of Example 1 by dispersing 77.7 grams of titanium dioxide in 173.1 grams of acrylic-chlorendic ester produced in Example 6 with 1.9 grams of dispersing agent, 0.43 grams of flow modifier and 25.0 grams of methyl isobutyl ketone. The second component in this case was 25 grams of persulfuric acid epoxidized linseed oil having 9.2% epoxide content. The coating composition resulting from the blend of the two components was coated on steel panels and cured at ambient temperature. The film and the paint itself had an epoxide to acid equivalent ratio of 1.2:1. Through dry and tack-free time was four hours. After seven days, the cured film exhibited high gloss (60°/20° gloss of 92/85), gloss retention of 60% (60° gloss) after 1000 hours QUV exposure. Film hardness was F pencil hardness. After 21 months exposure in Florida this coating retained 51% of its original 60° gloss. This example illustrates the use of an alternate epoxidized vegetable oil epoxy component with higher epoxide content with the same acrylic copolymer chlorendic half-ester polymer.

Example 9

An acrylic epoxy copolymer was prepared from glycidyl methacrylate (30%), butyl acrylate, methyl methacrylate and styrene from the following solvent and reacting solutions.

|  | Parts by Weight |
|---|---|
| **Portion 1** | |
| Propylene glycol methyl ether acetate | 848.00 |
| | |
| **Portion 2** | |
| Glycidyl methacrylate | 375.00 |
| Butyl acrylate | 750.00 |
| Methyl methacrylate | 62.50 |
| Styrene | 62.50 |
| Azobis (Cyclohexane carbonitrile) | 10.00 |
| | |
| **Portion 3** | |
| Di t-Butyl peroxide | 12.00 |

The ingredient of Portion 1 was charged into a reaction flask and heated to approximately 123°C. The reaction temperature was maintained at 123°C while adding Portion 2 dropwise over a three-hour period. The reaction was maintained at the reaction temperature for one hour after which Portion 3 was charged. The reaction mixture was maintained at 123°C for four hours. The final resin had a number average molecular weight of 8268 (gel permeation chromatography), a viscosity of 12.3 stokes, an epoxy equivalent weight of 751.2, and a solids content of 60.0% by weight.

Example 10

A coating solution component was formulated by dispersing 29.4 grams of titanium dioxide in 39.8 grams of the polymer produced in Example 6, 1.90 grams of dispersing agent, 0.43 grams of 50% flow modifier and 10.0 grams of methyl isobutyl ketone. The second component was in this case 41.7 grams of the glycidyl methacrylate copolymer of Example 9 above. The blended components had a 1.2:1 epoxide:acid equivalence ratio. The coating composition was applied to steel panels and cured at ambient temperature for seven days. The film's air dry time was four hours. The cured film displayed excellent gloss (60°/20° gloss of 90/82), gloss retention of 54% (60° gloss) after 1500 hours QUV exposure and an F pencil hardness. After 21 months exposure in Florida, this coating retained 41% of its original 60° gloss. This example illustrates the use of a glycidyl methacrylate copolymer as an alternate type of aliphatic epoxy functional second component polymer in the paint.

Example 11

An acrylic-chlorendic half-ester was prepared from hydroxyethyl methacrylate, butyl methacrylate and chlorendic anhydride (40%) from the following solvent and reactant solutions.

8

## Acrylic-Chlorendic Ester Preparation

|  | Parts by Weight |
|---|---|
| **Portion 1** | |
| Propylene glycol methyl ether acetate | 900.00 |
| | |
| **Portion 2** | |
| Hydroxyethyl methacrylate | 276.00 |
| Butyl methacrylate | 633.00 |
| Azobis (2-methylpropanenitrile) | 16.00 |
| Isooctyl thioglycolate | 12.00 |
| | |
| **Portion 3** | |
| Di t-butyl peroxide | 12.00 |
| | |
| **Portion 4** | |
| Chlorendic anhydride | 606.00 |
| Propylene glycol methyl ether acetate | 137.00 |

Portion 1 was charged into a reaction vessel and heated to reflux at 140°C. Reflux was maintained while charging Portion 2 dropwise over a three-hour period. The reaction mixture was maintained at 140°C for two hours after which time Portion 3 was charged. The mixture was maintained at 140°C for three hours. The acrylic copolymer produced had a number average molecular weight of 3500 (gel permeation chromatography). The resin had viscosity of 2 stokes and a solids content of 47% by weight. The reaction temperature was cooled to 122°C to charge Portion 4. The esterification process was maintained at 122°C for four hours. The final product had a number average molecular weight of 5100 (gel permeation chromatography), viscosity of 12.8 stokes, acid number of 69 and a solids content of 60% by weight.

### Example 12

An acrylic epoxy copolymer was prepared from glycidyl methacrylate (70%) butyl acrylate and styrene from the following solvent and reactant solutions.

## Copolymer Preparation

|  | Parts by Weight |
|---|---|
| **Portion 1** | |
| Propylene glycol methyl ether acetate | 880.00 |
| | |
| **Portion 2** | |
| Glycidyl methacrylate | 875.00 |
| Butyl acrylate | 350.00 |
| Styrene | 25.00 |
| Azobis (2-methylpropanenitrile) | 30.00 |
| Isooctyl thioglycolate | 24.00 |
| | |
| **Portion 3** | |
| Di t-Butyl Peroxide | 16.00 |

Portion 1 was charged into a reaction vessel and heated to reflux, approximately 140°C. Reflux was maintained while charging Portion 2 mixture dropwise over a three-hour period. The reaction was maintained at 140°C for two hours after which time Portion 3 was added. The reaction mixture was maintained at the reaction temperature for five hours. The final copolymer produced had a number average molecular weight of 2795 (gel permeation chromatography), a viscosity of 3.3 stokes, epoxy equivalent weight of 361.2 and a solids content of 58.3% by weight.

Example 13

A coating formulation component was produced using the method of Example 1 by dispersing 50.0 grams of titanium dioxide into 90.2 grams of the polymer of Example 12, 1.90 grams of dispersing agent, 0.5 grams of 50% flow modifier and 10.0 grams of methyl isobutyl ketone. The second component was the 70% glycidyl methacrylate copolymer of Example 12. The paint prepared by blending the two components had an epoxide to acid equivalent ratio of 1.2:1 and was applied on steel panels and cured at ambient temperature. The film was through dry and tack-free after three hours. The seven-day cured films displayed high gloss (60° gloss of 90), resisted 58 MEK-soaked rag rubs, and had an F pencil hardness. A gloss retention of 90% (60° gloss) after 1500 hours QUV exposure was seen. This example illustrates the use of a polymer with a high content of glycidyl methacrylate as an epoxy functional second component.

Example 14

An acrylic chlorendic resin was prepared from hydroxyethyl methacrylate, butyl acrylate, methyl methacrylate and chlorendic anhydride (40%) from the following solvent and reactant solutions.

## Acrylic-Chlorendic Ester Preparation

|  | Parts by Weight |
|---|---|
| **Portion 1** | |
| Methyl amyl ketone | 608.20 |
| | |
| **Portion 2** | |
| Hydroxyethyl methacrylate | 265.34 |
| Butyl acrylate | 517.20 |
| Methyl methacrylate | 91.30 |
| Ethyl-3,3-di(t-amylperoxy)butyrate | 38.45 |
| | |
| **Portion 3** | |
| Di t-butyl peroxide | 11.49 |
| | |
| **Portion 4** | |
| Chlorendic anhydride | 583.00 |
| Benzyldimethyamine | 5.80 |

The ingredient of Portion 1 was charged into a reaction flask and heated to reflux, approximately 146°C. Reflux was maintained while adding Portion 2 mixture dropwise over a three-hour period. The reaction mixture was maintained at 146°C for two hours after which time Portion 3 was charged and was maintained at the reaction temperature for three hours. The resulting acrylic copolymer had a number average molecular weight of 1100 (gel permeation chromatography). The copolymer solution had a viscosity of 1.1 stokes and a solids content of 59.3% by weight. The ingredients of portion 4 were charged at 93°C. Benzyldimethylamine was charged dropwise over a 30 to 45 minute period. The reaction was maintained at 93°C for four hours. The final resin had a number average molecular weight of 2009 (gel permeation chromatography), a viscosity of 14.5 stokes, acid number of 60 and a solids content of 70.7% by weight.

Example 15

An acrylic epoxy polymer was prepared from glycidyl methacrylate (70%), butyl acrylate and styrene from the following solvent and reactant solutions.

10

## Copolymer Preparation

|  | Parts by Weight |
|---|---|
| **Portion 1** | |
| Methyl amyl ketone | 867.00 |
| | |
| **Portion 2** | |
| Glycidyl methacrylate | 1500.00 |
| Butyl acrylate | 600.00 |
| Styrene | 43.00 |
| Ethyl-3,3-di(t-amylperoxy)butyrate | 80.00 |
| | |
| **Portion 3** | |
| Di t-Butyl Peroxide | 24.00 |

Portion 1 was charged into a reaction flask and heated to reflux, approximately 146°C. Reflux was maintained as ingredients of Portion 2 were added dropwise over a three-hour period. The reaction was maintained at reflux for three hours, after which time Portion 3 was charged. The reaction was maintained at 146°C for five hours. The final polymer had a number average molecular weight of 1693 (gel permeation chromatography), a viscosity of 7.1 stokes, epoxy equivalent weight of 301.9 and a solids content of 70.2% by weight.

### Example 16

A coating composition component was prepared using the method of Example 1 by dispersing 75.4 grams of titanium dioxide with 118.1 grams of the above acrylic-chlorendic resin of Example 14, 90 grams of MPA dispersing agent, 0.5 grams of 50% flow modifier, and 25.0 grams of methyl isobutyl ketone. The second component was 40 grams of the polymer solution of Example 15. The components were blended to a 1.2:1 epoxide:acid ratio and the resulting paint was coated on steel panels and cured at ambient temperature for seven days. The film dry through and tack-free time was five hours. The cured films exhibited high gloss (60°, gloss of 91) and B pencil hardness, gloss retention of 93% (60° gloss) after 1000 hours QUV exposure and 88% after 1450 hours. This example illustrates the use of an acrylic copolymer chlorendic half-ester with softer, more flexible acrylic copolymer (higher butyl acrylate content).

### Example 17

An acrylic-chlorendic ester was produced from hydroxyethyl methacrylate, butyl methacrylate and chlorendic anhydride (60%) from the following solvent and reactant solutions.

## Acrylic-Chlorendic Ester Preparation

|  | Parts by Weight |
|---|---|
| **Portion 1** | |
| Methyl amyl ketone | 914.80 |
| | |
| **Portion 2** | |
| Hydroxyethyl methacrylate | 436.40 |
| Butyl methacrylate | 203.10 |
| Ethyl-3,3-di(t-amylperoxy)butyrate | 41.10 |
| | |
| **Portion 3** | |
| Di t-butyl peroxide | 16.60 |
| | |
| **Portion 4** | |
| Chlorendic anhydride | 957.90 |
| Benzyldimethylamine | 19.00 |
| Methyl amyl ketone | 186.00 |

Portion 1 was charged into a reaction vessel and heated to reflux, approximately 146°C. Reflux was maintained as ingredients of Portion 2 were added dropwise over a three-hour period. The reaction mixture was maintained at reflux for two hours after which time Portion 3 was charged. The reaction was maintained at 146°C for additional three hours. The reaction temperature was reduced to 93°C to charge Portion 4. The esterification process was maintained at 93°C for four hours. The final copolymer had a number average molecular weight of 851 (gel permeation chromatography), viscosity of 3.1 stokes, acid number of 87.8 and a solids content of 59.4% by weight. This example illustrates the use of methyl amyl ketone as the reaction solvent.

Example 18

A coating composition component was prepared by dispersing 88.1 grams of titanium dioxide in 128.1 grams of the polymer of Example 17, 1.9 grams of dispersing agent, and 0.5 grams of 50% flow modifier in xylene using the method of Example 1. The second component was composed of 50 grams of epoxidized tall fatty acid ester having 5.8% epoxide content and 25.3 grams of methyl isobutyl ketone. The paint produced by mixing the compounds had an epoxide to acid equivalent ratio of 1.2:1 and a VOC of 3.29 pounds organic solvent per gallon (ASTM D-3960) indicating a suitability for high solids (low solvent) coatings applications. Coating films were applied at one mil thickness to steel panels and allowed to dry and cure at ambient temperature. The coatings had a through dry and tack-free time of three and one-half hours. After seven days air dry the coatings films had a pencil hardness of H and resisted 42 rubs with a methyl ethyl ketone-soaked rag. A 60° gloss of 91 was obtained and the films showed a 95% gloss retention after nine months of 45° south Florida exposure. This example illustrates the performance of an acrylic copolymer with a 60% Chlorendic anhydride half-ester content.

Example 19

An acrylic-chlorendic ester was prepared from hydroxyethyl methacrylate, lauryl methacrylate, methyl methacrylate and chlorendic anhydride (40%) from the following solvent and reactant solutions.

## Acrylic-Chlorendic Ester Preparation

|  | Parts by Weight |
|---|---|
| **Portion 1** | |
| Methyl amyl ketone | 733.00 |
| | |
| **Portion 2** | |
| Hydroxyethyl methacrylate | 300.00 |
| Lauryl methacrylate | 246.00 |
| Methyl methacrylate | 441.00 |
| Ethyl-3,3-di(t-amylperoxy)butyrate | 34.00 |
| | |
| **Portion 3** | |
| Di t-butyl peroxide | 24.00 |
| | |
| **Portion 4** | |
| Chlorendic anhydride | 658.00 |
| Benzyldimethylamine | 7.00 |
| Methyl amyl ketone | 130.00 |

The ingredient of Portion 1 was charged into a reactor and heated to reflux, approximately 138°C. Reflux was maintained while ingredients of Portion 2 were added dropwise over a three-hour period. The mixture was maintained at reflux for two hours after which time Portion 3 was charged. The reaction temperature was maintained at 138°C for additional three hours. The ingredients of Portion 4 were charged at 71°C. The reaction temperature was maintained at 71°C for four hours. The final resin had a number average molecular weight of 2455 (gel permeation chromatography), viscosity of 95.6 stokes, acid number of 62.9 and a solids content of 65% by weight.

12

## Example 20

A coating composition component was prepared using the method of Example 1 by dispersing 77.7 grams of titanium dioxide into 145.1 grams of the polymer of Example 19, 1.9 grams of dispersing agent, and 0.5 grams of flow modifier. The second component was a mixture of 35 grams of epoxidized tall fatty acid ester having 5.8% epoxide content and 59.7 grams of MIBK. The paint prepared from these components had an epoxide to acid equivalence of 1.2:1. It was applied to steel panels at a thickness of one mil and allowed to dry at ambient temperature; it had a through dry and tack-free time of one hour. After seven days of curing the coating films had a pencil hardness of "H," a gloss of 87 at 60°, and passed 150 rubs of a methyl ethyl ketone-soaked rag. This example illustrates the use of an acrylic copolymer with long (lauryl) side chains to impart greater compatibility with other polymers.

## Example 21

An acrylic-chlorendic ester was synthesized from hydroxypropyl methacrylate, butyl methacrylate and chlorendic anhydride (40%) from the following solvent and reaction solutions.

### Acrylic-Chlorendic Ester Preparation

| | Parts by Weight |
|---|---|
| **Portion 1** | |
| Propylene glycol methyl ether acetate | 801.00 |
| **Portion 2** | |
| Hydroxypropyl methacrylate | 318.00 |
| Butyl methacrylate | 591.00 |
| Azobis (Cyclohexanecarbonitrile) | 7.70 |
| Isooctyl Thioglycolate | 3.90 |
| **Portion 3** | |
| t-Butyl Peroxybenzoate | 7.70 |
| **Portion 4** | |
| Chlorendic anhydride | 606.00 |
| **Portion 5** | |
| Propylene glycol methyl ether acetate | 100.00 |

Solvent Portion 1 was charged into a reaction flask and heated to 121°C. The reaction temperature was maintained at 121°C while adding Portion 2 mixture dropwise over a three-hour period. The reaction mixture was maintained at 121°C for one hour after which Portion 3 was added and maintained at reaction temperature for four hours. Portion 4 was charged and maintained at the reaction temperature for 45 minutes and then Portion 5 was added. The final product had a number average molecular weight of 9287 (gel permeation chromatography), viscosity of 53.0 stokes, acid value of 72.4 and a solids content of 62.0% by weight.

## Example 22

A coating composition component was prepared by dispersing 63 grams of titanium dioxide in 130.1 grams of the polyacrylic copolymer chlorendic half-ester of Example 21, 1.9 grams of dispersing agent, 0.43 grams of 50% flow modifier in xylene and 25 grams of methyl isobutyl ketone. A second component was prepared from 25 grams of Union Carbide's ERL-4299, a cycloaliphatic adopic ester di epoxide and 16 grams of methyl isobutyl ketone. When the two components were mixed the resultant paint was coated on steel panels to a thickness of one mil and allowed to cure at ambient temperature. After two and one-half hours, the films were tack free and dry through. After seven days the films had a pencil hardness of "F" and passed 230 rubs with a methyl ethyl ketone-soaked rag. The paint films had a 60° gloss of 89 and retained 79% of their gloss after 800 hours in the QUV machine exposure. This example illustrates the use of another type of aliphatic (cyclo) epoxide functional polymer as a second component for curing of the acrylic copolymer chlorendic half-ester polymers of these disclosures.

**Claims**

1. An ultraviolet light resistant acrylic polymer **characterized in** that it comprises the reaction product of a multifunctional aliphatic epoxide containing oligomer and a chlorendic half-ester functional acrylic polymer the chlorendic half-ester comprising the reaction product of

a) from 13 to 58 percent by weight of half-ester of a hydroxyl lower alkyl acrylate

b) from 5 to 56 percent by weight of half-ester of additional unsaturated monomer copolymerizable with a)

c) from 30 to 60 percent by weight of half-ester of chlorendic anhydride, wherein a) and b) are copolymerized to form a prepolymer and c) is reacted with pendant hydroxy groups on the polymer.

2. The polymer of Claim 1 wherein the hydroxy lower alkyl acrylate is selected from the group consisting of hydroxyethyl acrylate, hydroxyethyl methacrylate, hydroxypropylacrylate, hydroxypropylmethacrylate, 2-hydroxybutylacrylate and mixtures thereof.

3. The polymer of Claim 1 or 2 wherein the additional unsaturated monomer is a vinyl unsaturated monomer.

4. The polymer of Claim 3 wherein the vinyl additional unsaturated monomer is selected from the group consisting of methyl acrylate, methyl methacrylate, ethyl acrylate, ethyl methacrylate, propyl methacrylate, butyl methacrylate, lauryl acrylate, lauryl methacrylate, 2-ethylhexyl acrylate, isobutylacrylate, styrene, vinyltoluene, acylonitril and mixtures thereof.

5. The polymer of Claim 1 wherein the epoxide containing oligomer is selected from the group consisting of epoxidized soya bean oil, 3',4'-epoxycyclohexylmethyl-3,4-epoxycyclohexane carboxylate, epoxy functional acrylic polyol from copolymers of glycidyl methacrylate, epoxidized tall fatty acid pentaerythitrol ester, and mixtures thereof.

6. The polymer of Claim 1 wherein the equivalent ratio of epoxy: acid in the oligomer-half ester reaction mixture is from 0.8 : 1 to 2 : 1, preferably 1.1 : 1 to 1.5 : 1.

7. An acrylic polymer **characterized in** that it is chlorendic half-ester functional and comprises the reaction product of:

a) from 13 to 58 percent by weight of half-ester of a hydroxy lower alkyl acrylate

b) from 5 to 56 percent by weight of half-ester of additional unsaturated monomer copolymerizable with a)

c) from 30 to 60 percent by weight of half-ester of chlorendic anhydride, wherein a) and b) are copolymerized to form a prepolymer and c) is reacted with pendant hydroxy groups on the prepolymer.

8. The half-ester of Claim 7 wherein the hydroxy lower alkyl acrylate is selected from the group consisting of hydroxyethyl acrylate, hydroxyethyl methacrylate, hydroxypropylacrylate, hydroxypropylmethacrylate, 2-hydroxybutylacrylate and mixtures thereof.

9. The half-ester of Claim 7 or 8 wherein the additional unsaturated monomer is a vinyl unsaturated monomer.

10. A method for the manufacture of an ester **characterized in** that the ester is a chlorendic half-ester, and which method comprises:

a) copolymerizing from 5 to 56 percent by weight of half-ester of a hydroxy lower alkyl acrylate with from 5 to 56 percent by weight of half-ester of additional unsaturated monomer in an inert solvent in the presence of a catalyst, by reflux at from 135 to 150 °C to form a prepolymer, and

b) reacting the resulting reaction mixture with chlorendic anhydride by mixing chlorendic anhydride into the reaction mixture at a molar ratio of from 1 : 1 to 1 : 2 prepolymer to chlorendic anhydride and reacting at 80 to 150 °C.

**11.** The method of Claim 10 wherein the inert solvent is a glycol ether acetate.

**12.** The method of Claim 1 wherein the hydroxy lower alkyl acrylate and additional monomer are added incrementally to the solvent over a time period of from 2 to 4 hours.

**13.** The method of Claim 12 wherein the reaction mixture from step a) and chlorendic anhydride are reacted for from 0.5 to 2 hours.

**14.** The method of Claim 10 wherein the hydroxy lower alkyl acrylate is selected from the group consisting of hydroxyethyl acrylate, hydroxyethyl methacrylate, hydroxypropylacrylate, hydroxypropylmethacrylate, 2-hydroxybutylacrylate and mixtures thereof.

**15.** The method of one of the Claims 10 to 14 wherein the additional unsaturated monomer is a vinyl unsaturated monomer.

**16.** An ultraviolet light resistant coating comprising the acrylic polymer of Claim 1.